# EUROPÄISCHE PATENTSCHRIFT

(11) **EP 4 305 398 B1**
(45) Veröffentlichungstag und Bekanntmachung des Hinweises auf die Patenterteilung: **29.10.2025**
(21) Anmeldenummer: 22712406.2
(22) Anmeldetag: 10.03.2022
(51) Int. Cl.: G01N 1/30, G01N 1/31

(54) **VERFAHREN ZUR GEWEBEPROZESSIERUNG UND GEWEBEPROZESSOR**
TISSUE PROCESSING METHOD AND TISSUE PROCESSOR
PROCESSUS DE TRAITEMENT DES TISSUS ET PROCESSEUR DE TISSUS

(30) Priorität: 11.03.2021 DE 102021105932
(43) Veröffentlichungstag der Anmeldung: 17.01.2024
(73) Patentinhaber: Leica Biosystems Nussloch GmbH, 69226 Nussloch (DE)
(72) Erfinder: HOPERMANN, Hermann, 23847 Kastorf (DE); AHMAD, Hanizah, 69226 Nussloch (DE); ULBRICH, Hermann, 76669 Bad Schönborn-Mingolsheim (DE); THIELE, Hendrik, 69121 Heidelberg (DE)
(74) Vertreter: Schaumburg und Partner Patentanwälte mbB
(86) Internationale Anmeldenummer: PCT/EP2022/056261
(87) Internationale Veröffentlichungsnummer: WO 2022/189594

(56) Entgegenhaltungen:
- WO-A1-2005/031312
- WO-A1-2019/036760
- DE-A1- 102008 054 066
- DE-A1- 102008 054 071
- DE-A1- 102009 038 481

## Beschreibung

Die vorliegende Erfindung betrifft ein Verfahren zur Gewebeprozessierung zumindest eines biologischen Gewebes sowie einen dazu verwendbaren Gewebeprozessor.

### Hintergrund der Erfindung

Gewebeprozessoren können dazu eingesetzt werden, biologische Gewebe, an denen beispielsweise pathologische Untersuchungen durchgeführt werden sollen, für diese Untersuchung zu präparieren. Beispielsweise sind derartige Gewebeprozessoren in der DE 10 2009 038 481 A1 oder der DE 10 2008 054 071 A1 beschrieben.

Die WO 2019/036760 A1 beschreibt einen Gewebeprozessor, bei dem eine Reinheit eines Prozessierungsfluids sensorisch ermittelt wird, und basierend auf der ermittelten Reinheit zur Gewebeprozessierung verwendet oder verworfen wird.

### Offenbarung der Erfindung

Erfindungsgemäß werden ein Verfahren zur Gewebeprozessierung und ein Gewebeprozessor mit den Merkmalen der unabhängigen Patentansprüche vorgeschlagen. Vorteilhafte Ausgestaltungen sind Gegenstand der Unteransprüche sowie der nachfolgenden Beschreibung.

In Einzelnen umfasst ein erfindungsgemäßes Verfahren zur Gewebeprozessierung zumindest eines biologischen Gewebes ein Bearbeiten des zumindest einen Gewebes unter Verwendung zumindest eines Fluids, ein Ermitteln einer Konzentrationsänderungsrate in dem zumindest einen Fluid, und ein Durchführen einer Maßnahme in Abhängigkeit von der ermittelten Konzentrationsänderungsrate. Dadurch kann ein sinnvolles Ende des jeweiligen Bearbeitungsschritts ermittelt werden (wenn die Konzentrationsänderungsrate abnimmt, verändert sich das Gewebe chemisch immer weniger) und eine entsprechende Maßnahme eingeleitet werden. Beispielsweise kann als die Maßnahme ein Signal ausgegeben werden, um das Ende des Bearbeitungsschrittes anzuzeigen, oder ein nachfolgender Bearbeitungsschritt kann automatisch gestartet werden.

Insbesondere kann das Bearbeiten ein zumindest teilweises Anfärben des zumindest einen Gewebes umfassen. Somit kann eine zu starke Einfärbung vermieden werden, was sich positiv auf die Erkennbarkeit von zu untersuchenden Gewebemerkmalen auswirkt.

Alternativ oder zusätzlich kann das Bearbeiten des zumindest einen Gewebes nacheinander einen oder mehrere der folgenden Schritte, zweckmäßigerweise in der angegebenen Reihenfolge, umfassen: ein Fixieren des zumindest einen Gewebes unter Verwendung zumindest eines Fixierfluids, wobei das zumindest eine Gewebe gehärtet wird, einen Fluidaustausch unter Verwendung eines polaren nichtwässrigen Austausch-Lösungsmittels, wobei Wasser aus dem zumindest einen Gewebe verdrängt und durch das Austausch-Lösungsmittel ersetzt wird, ein Klären unter Verwendung eines Klärfluids, das insbesondere ein unpolareres organisches Lösungsmittel als das Austausch-Lösungsmittel umfasst, wobei das Austausch-Lösungsmittel in dem zumindest einen Gewebe durch das Klärfluid ersetzt wird, und ein Imprägnieren des zumindest einen Gewebes unter Verwendung eines Imprägniermittels, wobei das Klärfluid in dem zumindest einen Gewebe durch das Imprägniermittel ersetzt wird, wobei das Ermitteln der Konzentrationsänderungsrate in dem Fixierfluid und/oder dem Austausch-Lösungsmittel und/oder dem Klärfluid und/oder dem Imprägniermittel während der jeweiligen Verwendung durchgeführt wird, und zumindest eine Maßnahme in Abhängigkeit von zumindest einer der ermittelten Konzentrationsänderungsraten durchgeführt wird. Dadurch lässt sich eine gleichbleibende Präparationsqualität bei Gewebeproben erzielen, unabhängig von deren Größe, Geometrie oder sonstigen Eigenschaften. Eine übermäßige oder unzureichende Infiltration des jeweiligen Fluids in das Gewebe wird dadurch sicher vermieden.

Die Maßnahme kann insbesondere ein Beenden des jeweiligen Verfahrensschrittes, während dessen die Konzentrationsänderungsrate ermittelt wurde, und ein Fortschreiten zum jeweils folgenden Verfahrensschritt umfassen, wenn die Konzentrationsänderungsrate einen vorbestimmbaren Schwellwert unterschreitet. Dadurch wird eine weitgehende Automatisierung der Gewebepräparation ermöglicht.

Beispielsweise kann der Schwellwert für die Konzentrationsänderungsrate weniger als 20, 10, 5 oder 2 %/min, bezogen auf eine absolute Konzentration der jeweiligen Spezies, betragen. Bei derart kleinen Änderungsraten ist von keiner wesentlichen Beeinflussung der Gesamtqualität der Gewebeprozessierung mehr auszugehen. Alternativ oder zusätzlich kann der Schwellwert in Abhängigkeit von einer Größe, Masse oder einem Volumen des zumindest einen Gewebes bestimmt werden, um bei variabler Probengröße gleichbleibende Bearbeitungsbedingungen zu gewährleisten. Auch eine Einbeziehung von Qualitätsanforderungen kann vorteilhaft sein, so dass bei hohen Anforderungen ein niedriger Schwellwert gewählt wird, während bei niedrigeren Qualitätsanforderungen ein höherer Schwellwert (und damit einhergehend eine kürzere Prozessierungsdauer) gewählt werden kann. Hierbei ist anzumerken, dass die betrachteten Konzentrationsänderungen typischerweise einer Exponentialfunktion folgen, so dass eine Verdoppelung des Schwellwerts typischerweise nicht mit einer Halbierung der Prozessierungsdauer einhergehen wird.

In vorteilhaften Ausgestaltungen umfasst das Verfahren ferner ein Ermitteln wenigstes einer absoluten Konzentration in dem Fluid, insbesondere dem Fixierfluid und/oder dem Austausch-Lösungsmittel und/oder dem Klärfluid und/oder dem Imprägniermittel, und ein Einleiten eines Austauschs des jeweiligen Fluids, wenn die ermittelte absolute Konzentration einen vorgebbaren Schwellwert erreicht. Dadurch kann eine Minimalqualität des bzw. der Fluide sichergestellt werden und das Verfahren somit wirtschaftlich hinsichtlich der Ausnutzung der Fluide optimiert werden, ohne Qualitätseinbußen hinnehmen zu müssen.

Es sei hier betont, dass jeder der genannten Bearbeitungsschritte auch mehrere, im Wesentlichen gleichartige Einzelschritte umfassen kann. Beispielsweise kann der Fluidaustausch durch mehrere, beispielsweise 2, 3, 4, 5 oder mehr aufeinanderfolgende Bäder in dem jeweiligen Austausch-Lösungsmittel bewirkt werden. Analoges gilt auch für die anderen erwähnten Bearbeitungsschritte.

Typischerweise enthält ein Fixierfluid 1 bis 4 % Formaldehyd in wässriger Lösung und ist mit 0,5 bis 2 % Methanol gegen Autopolymerisation stabilisiert. Ferner kann das Fixierfluid einen Phosphatpuffer (z.B. Kaliumdihydrogenphosphat und/oder Dinatriumhydrogenphosphat-Dihydrat 1 bis 12 g/1000 mL) enthalten.

Das Austausch-Lösungsmittel enthält typischerweise eine Mischung aus einem einfachen Alkohol (z.B. Ethanol und/oder Isopropanol) und Wasser mit 10 bis 99,9 % Alkoholanteil. Während des Fluid- bzw. Medienaustauschs werden typischerweise Lipide, insbesondere Fette und Sphingolipide (insbesondere Ceramide), und Lipoproteine aus dem Gewebe gelöst. Insbesondere gegen Ende eines ersten Fluidaustauschschrittes können diese Stoffe einen Gesamtanteil von 1 bis 15 % des Austausch-Lösungsmittels ausmachen.

Das Klärfluid enthält typischerweise Xylol und/oder andere aromatische Kohlenwasserstoffe (z.B. Toluol) sowie einen einfachen Alkohol (z.B. den bzw. die Alkohol(e), die auch in dem Austausch-Lösungsmittel enthalten sind), wobei der Anteil an aromatischen Spezies in dem Klärfluid zwischen 10 und 99,9 % liegt.

Als Imprägniermittel wird in der Regel histologisches Paraffin verwendet, das die in dem Klärfluid enthaltenen aromatischen Substanzen enthalten kann, wobei der Anteil des Paraffins an dem Imprägniermittel zwischen 70 und 99,9 % liegt. Sämtliche Konzentrations- bzw. Anteils-Angaben beziehen sich jeweils auf das Volumen des betrachteten Gemischs. Typischerweise können Konzentrationen von mehreren Bädern eines einzigen Bearbeitungsschrittes zu späteren Bädern hin ansteigen.

Ein erfindungsgemäßer Gewebeprozessor umfasst zumindest einen Sensor, der zur Ermittlung einer Konzentration und/oder einer Konzentrationsänderungsrate in einem in dem Gewebeprozessor verwendeten Fluid eingerichtet ist, und Mittel, die den Gewebeprozessor zur Durchführung eines wie vorstehend beschriebenen Verfahrens ertüchtigen. Der Gewebeprozessor profitiert somit von den erläuterten Vorteilen eines entsprechenden Verfahrens sinngemäß entsprechend und umgekehrt. Der erfindunggemässe Sensor ist in Anspruch 6 definiert.

Der Sensor ist bevorzugt dazu eingerichtet, die Konzentration und/oder Konzentrationsänderungsrate auf Basis einer Schallgeschwindigkeit in dem Fluid und/oder einer akustischen Impedanz des Fluids und/oder einer Temperatur des Fluids und/oder einem chemischen und/oder einem elektrochemischen und/oder einem elektrischen Verhalten des Fluids und/oder optischen Eigenschaften des Fluids zu ermitteln. Dies sind besonders geeignete Parameter, anhand derer sich präzise Rückschlüsse auf Konzentrationen von Fluiden bzw. deren Änderungsraten ziehen lassen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben. Dabei werden Bezugszeichen, die sich auf eine Vorrichtungskomponente beziehen auch zur Bezeichnung eines darin durchgeführten Verfahrensschrittes verwendet und umgekehrt, um Wiederholungen zu vermeiden.

### Figurenbeschreibung

Figur 1 zeigt eine schematische Darstellung einer vorteilhaften Ausgestaltung eines erfindungsgemäßen Gewebeprozessors.
Figur 2 zeigt typische Konzentrationsverläufe, wie sie in Fluiden im Rahmen der vorliegenden Erfindung auftreten können.

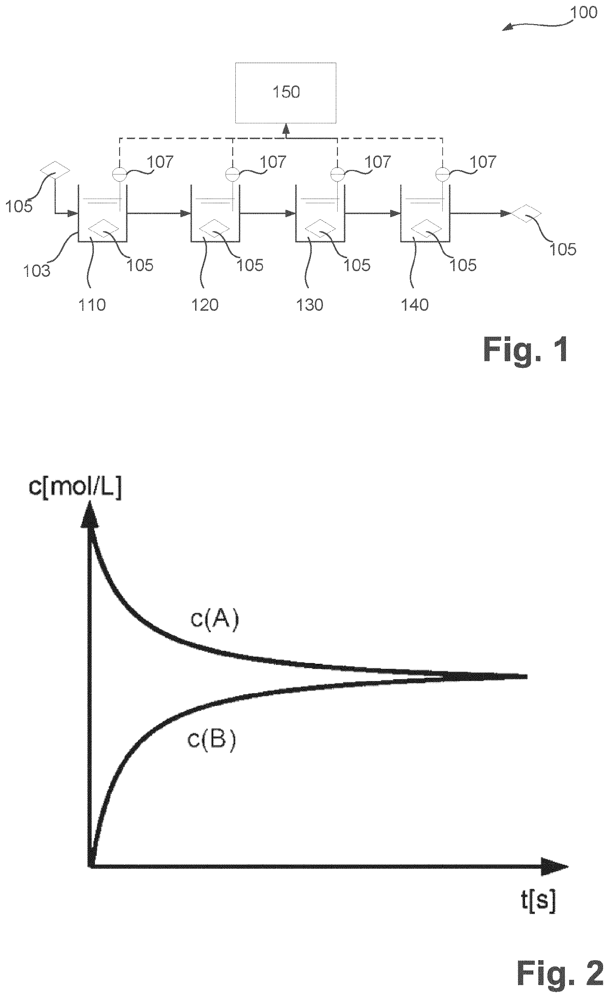

In Figur 1 ist eine vorteilhafte Ausgestaltung eines erfindungsgemäßen Gewebeprozessors schematisch dargestellt und insgesamt mit 100 bezeichnet.

Der Gewebeprozessor 100 umfasst zumindest eine Retorte 103, die zur Aufnahme einer oder mehrerer biologischer Gewebe bzw. Proben 105 sowie zur Befüllung mit zumindest einem organischen Fluid geeignet und eingerichtet ist. Insbesondere kann die Retorte ein oder mehrere Materialien aus der Gruppe aus Edelstahl, Aluminium und anderen Metallen, Polyethyletherketon (PEEK), Polytetrafluorethylen (PTFE), Polyethylen (PE), Polypropylen (PP), Polycarbonat (PC) und anderen geeigneten Kunststoffen und Glas umfassen.

Ferner weist der Gewebeprozessor 100 einen Sensor 107 auf, der zur Ermittlung einer Konzentration und/oder einer Konzentrationsänderungsrate und/oder anderer Parameter eingerichtet ist, die zur Ermittlung einer Konzentration bzw. Konzentrationsänderungsrate verwendet werden können. Zu diesem Zweck ist der Sensor 107 so angeordnet, dass er die bzw. den jeweiligen Parameter mit Bezug zu einem Inhalt der Retorte 103 erfassen kann. Beispielsweise kann der Sensor 107 in einer Wandung der Retorte 103 angeordnet sein oder in ein inneres Volumen der Retorte 103 hineinragen.

Beispielsweise kann es sich bei dem Sensor um eine Vorrichtung handeln, die eine Schallgeschwindigkeit und/oder eine Impedanz des zu untersuchenden Fluids erfasst. Diese Parameter ändern sich mit der Konzentration von verschiedenen chemischen Spezies in einer Matrixflüssigkeit und sind sehr präzise messbar. Es sind jedoch auch andere Sensortypen als der Sensor 107 verwendbar, insbesondere solche, die eine Konzentrationsmessung ermöglichen (z.B. pH-Elektroden, Spektrometer oder dergleichen)

Aus derartig gemessenen Parametern kann eine Recheneinheit 150 des Gewebeprozessors die Konzentration bzw. Konzentrationsänderungsrate in der Retorte ermitteln. Die Ermittlung der Konzentration bzw. deren Änderungsrate kann in einigen Ausgestaltungen auch integral in dem Sensor 107 erfolgen, beispielsweise unter Verwendung einer dedizierten Recheneinheit des Sensors erfolgen, die z.B. in Form einer integrierten Schaltung, eines Mikroprozessors oder anderer geeigneter Vorrichtungen zur Datenverarbeitung bereitgestellt sein kann.

Eine Konzentrationsänderungsrate kann auch durch Ermittlung einer absoluten Konzentration in Verbindung mit einer Auswertung von deren zeitlichen Verlauf ermittelt werden. Dazu kann beispielsweise eine Ableitung eines geeignet gefilterten und/oder geglätteten zeitlichen Konzentrationsverlaufs gebildet werden. Auch eine Beurteilung einer Konzentrationsänderungsrate ohne Ermittlung einer tatsächlichen Konzentration kann möglich sein, da hierzu prinzipiell auch der Rohdatenverlauf eines von dem Sensor 107 generierten Sensorsignals herangezogen werden kann. Ist das Sensorsignal konstant, ist auch die zugrundeliegende Konzentration konstant und somit deren Änderungsrate gleich Null. Bei hohen Änderungsraten des Sensorsignals kann hingegen auch von einer hohen Konzentrationsänderungsrate ausgegangen werden.

Lokale Konzentrationsunterschiede innerhalb der Retorte 103 können durch eine geeignete Durchmischung, beispielsweise mittels eines Rührers (in der Figur nicht dargestellt) abgebaut werden, um Schwankungen in den Messungen des Sensors 107 zu vermeiden.

Damit der (passive) Reagenzienaustausch an der Grenzfläche des Gewebes beschleunigt wird, können die Retorte 103 und somit die eingesetzten Fluide beheizt werden. Dies verstärkt die Brownsche Molekularbewegung und erhöht somit die entsprechenden Diffusionsraten, die letztendlich für die Infiltration des Gewebes 105 verantwortlich sind.

In Figur 2 sind typische Konzentrationsverläufe, wie sie in Fluiden im Rahmen der vorliegenden Erfindung auftreten können, vereinfacht in Form eines Konzentrations-Zeit-Diagramms dargestellt und mit c(A) bzw. c(B) bezeichnet. Die Abszisse bildet dabei die Zeitachse, während auf der Ordinate die jeweilige Konzentration angegeben ist. Es sei ausdrücklich darauf hingewiesen, dass die Positionierung und Skalierung der beiden Konzentrationsverläufe c(A) und c(B) zueinander einen rein illustrativen Zweck verfolgt und keine Rückschlüsse auf jeweilige Absolutkonzentrationen oder Relativkonzentrationen der betreffenden Spezies erlaubt. Insbesondere sei darauf hingewiesen, dass der Achsenschnittpunkt nicht mit einem Nullwert auf der jeweiligen Achse zusammenfallen muss. Korrekt dargestellt ist hingegen der interne relative Verlauf beider Konzentrationsverläufe c(A) und c(B): Bei Spezies A handelt es sich um eine Komponente, die in dem betreffenden Fluid enthalten ist und in das prozessierte Gewebe 105 eingebracht wird, wodurch sich im Laufe des jeweiligen Verfahrensschrittes die Konzentration innerhalb des Fluids verringert, bis sich ein Gleichgewicht eingestellt hat. Bei Spezies B hingegen handelt es sich um eine Verbindung, die innerhalb des Gewebes 105 vorliegt oder gebildet wird und während des jeweiligen Verfahrensschrittes aus dem Gewebe in das Fluid übergeht, so dass sich deren Konzentration in dem Fluid während des Verfahrensschrittes so lange erhöht, bis sich die Konzentrationen in Gewebe 105 und Fluid angeglichen haben bzw. sich ein Gleichgewicht eingestellt hat. In beiden Konzentrationsverläufen c(A) und c(B) ergibt sich ein asymptotischer Verlauf, da die Triebkraft der Konzentrationsveränderung, nämlich der Konzentrationsunterschied zwischen Gewebe 105 und umgebendem Fluid mit fortschreitender Zeit abnimmt. Je niedriger der betreffende Konzentrationsunterschied, desto niedriger ist auch die entsprechende Nettodiffusionsrate, die den Konzentrationsunterschied abbaut, so dass sich eine abnehmende Steigung des jeweiligen Konzentrationsverlaufs c(A), c(B) ergibt.

Im Betrieb des Gewebeprozessors bzw. einer vorteilhaften Ausgestaltung eines erfindungsgemäßen Verfahrens, das in dem Gewebeprozessor 100 implementiert sein kann, wird die Gewebeprobe 105 hintereinander mehreren unterschiedlichen Prozessmedien 110, 120, 130, 140 in Form von Fluiden ausgesetzt, wobei in dem hier gezeigten Beispiel zunächst ein Fixierfluid 110 aufgebracht wird, das dazu dient, das Gewebe zu härten. Beispielsweise können dazu Formaldehyd, Paraformaldehyd, Glutaraldehyd, weitere Aldehyde, Aceton oder alkoholische Fixiermittel sowie Lösungen und/oder Mischungen davon verwendet werden. Üblicherweise wird eine 3,7-prozentige Formalinlösung (3,7% Formaldehyd-Lösung in Wasser mit Phosphatsalzen auf einen neutrale pH-Wert gepuffert) hierfür eingesetzt. Dabei kann vorgesehen sein, dass das Fixierfluid 110 einmalig oder mehrmalig auf ein und dieselbe Probe 105 angewandt wird. Wird Gewebe in dieses Fixierfluid, beispielsweise die erwähnte Formalinlösung, eingebracht, nimmt die Formaldehyd-Konzentration der Lösung anfangs mit der Zeit ab, weil das Gewebe dieses aufnimmt und verbraucht (Quervernetzung der Proteine). Eine solche Konzentrationsabnahme c(A) ist, wie oben beschrieben, in Fig. 2 schematisch dargestellt.

Nach der Fixierung 110 schließen sich ein oder mehrere Schritte eines Fluidaustauschs mit einem Austausch-Lösungsmittel 120 an. Dazu wird die Gewebeprobe 105 in das Austausch-Lösungsmittel getaucht (oder das Fixierfluid aus der Retorte entfernt und Austausch-Lösungsmittel in die Retorte eingebracht), so dass das Austausch-Lösungsmittel 120 die Probe 105 vollständig bedeckt. Dadurch werden eventuell noch vorhandenes Wasser aus der Probe 105 verdrängt, Fette gelöst und Rückstände des Fixierfluids 110 ausgewaschen. Daher sinkt die Konzentration der Hauptkomponente des Austausch-Lösungsmittels 120 analog zu dem oben beschriebenen Konzentrationsverlauf c(A), während die Konzentration von aus dem Gewebe 105 gelösten bzw. verdrängten Spezies (Fette, Wasser, Fixierfluid 110) in dem Austausch-Lösungsmittel 120 gemäß dem in Fig. 2 dargestellten Konzentrationsverlauf c(B) zunimmt. Als das Austausch-Lösungsmittel kommen insbesondere Ethanol, Methanol, Isopropanol und andere aliphatische sowie nicht aliphatische Alkohole sowie deren Mischungen in Betracht, z.B. 70% Ethanol. Entscheidend ist eine Mischbarkeit des verwendeten Austausch-Lösungsmittels 120 mit Wasser bzw. eine relativ hohe Löslichkeit von Wasser in dem verwendeten Austausch-Lösungsmittel 120. Auch der Fluidaustausch kann in mehreren, beispielsweise 2, 3, 4, 5 oder bis zu 10 oder 20, Schritten durchgeführt werden, wobei vorzugsweise bei späteren Schritten ein Austausch-Lösungsmittel 120 mit höherer Reinheit als bei früheren Schritten verwendet wird, um Kosten zu senken und dennoch eine hohe Qualität der Bearbeitung zu erzielen. Insbesondere kann das Austausch-Lösungsmittel 120 des letzten Schritts des Fluidaustauschs wasserfrei sein.

Praxisbeispiel: Gewebe 105, das zuvor in Formalinlösung 110 (96,3 Vol% Wasser) infiltriert wurde, wird im zweiten Schritt in z.B. 70%iges Ethanol 120 eingebracht. Hier wird das Wasser des Gewebes 105 gegen das umgebende Ethanol 120 ausgetauscht. Dadurch verringert sich die Ethanolkonzentration (c(A)) in dem Austausch-Lösungsmittel 120 um das Gewebe 105 herum. Diese nimmt nach einiger Zeit t[s] nicht weiter ab. Das Gewebe 105 weist dann eine im Wesentlichen identische Ethanolkonzentration wie das Austausch-Lösungsmittel 120 auf. Der Sensor 107 sensiert, wie bereits erläutert, diese im Wesentlichen asymptotische Konzentrationsabnahme c(A). Wenn sich die Konzentration des Austausch-Lösungsmittels 120 stabilisiert hat, wird es bspw. aus der Retorte 103 gepumpt bzw. ausgetauscht.

Das beispielsweise in Ethanol 120 eingebrachte Gewebe 105 gibt mit der Zeit umgekehrt auch Stoffe in das Reagenz ab, z.B. Fett und bestimmte Proteine. Nimmt die Stoffmenge (Konzentrationsverlauf c(B) in Fig. 2) dieser abgegebenen Komponenten nicht weiter zu, ist von einer vollständigen Gewebeinfiltration nach einer Zeit t[s] auszugehen. Die Sensorik überwacht dabei diese Mengenzunahme und das System kann im Anschluss den nächsten Prozessschritt starten. Dies ist besonders in den ersten Schritten des Fluidaustauschs gut zu sensieren, da diese Stoffe dann quantitativ herausgelöst sind und dementsprechend keine Konzentrationsänderung dieser Stoffe mehr zu erwarten ist.

Nach dem Fluidaustausch mit 120 folgt in dem dargestellten Beispiel ein Klären des Gewebes 105, wobei ein Klärfluid 130 verwendet wird, das das Austausch-Lösungsmittel 120 innerhalb des Gewebes 105 ersetzt. Als das Klärfluid 130 können insbesondere Isopropanol, Chloroform, Xylol, Toluol und andere aromatische Kohlenwasserstoffverbindungen sowie deren Mischungen und nichtwässrige Lösungen verwendet werden. Hierbei ist wiederum eine Mischbarkeit bzw. Löslichkeit des verwendeten Austausch-Lösungsmittels 120 in dem Klärfluid 130 entscheidend. Es sind auch bei dem Klären mehrere Schritte, beispielsweise 2, 3, 4 oder auch mehr Schritte, möglich, wobei unterschiedliche Schritte des Klärens mit jeweils (hinsichtlich Identität, Reinheit und/oder Mischungsverhältnis) unterschiedlichen Klärfluiden 130 durchgeführt werden können. Insbesondere kann bei frühen Schritten des Klärens ein Klärfluid 130 mit relativ hoher Polarität, bei späteren Klärschritten ein Klärfluid mit geringerer Polarität verwendet werden. Dadurch ergeben sich jeweils bessere Mischbarkeiten mit zuvor bzw. anschließend verwendetem Fluid.

Anschließend wird eine Imprägnierung des Gewebes 105 mit einem Imprägniermittel 140 durchgeführt. Insbesondere können als das Imprägniermittel Mischungen verschiedener verzweigter und/oder unverzweigter Alkane mit geeigneten Additiven verwendet werden. Besonders bevorzugt werden dabei solche Imprägniermittel, die bei Temperaturen unterhalb von 20 °C und über -70 °C, insbesondere auch bei Temperaturen über -20 °C, Feststoffe mit einer ausreichenden Festigkeit bilden, um Dünnschnitte eines Komposits aus Gewebe 105 und gekühltem Imprägniermittel 140 zu ermöglichen.

Bei einer erfindungsgemäßen Ausgestaltung eines solchen Verfahrens wird bei zumindest einem der beschriebenen Schritte eine Konzentrationsänderungsrate in dem entsprechenden Fluid 110, 120, 130, 140 ermittelt. Dazu wird der Sensor 107 verwendet. Beispielsweise kann während des Fluidaustauschs eine Konzentrationsänderung von Wasser in dem jeweiligen Austausch-Lösungsmittel 120 ermittelt werden. Diese Konzentrationsänderungsrate nimmt, wie bereits unter Verweis auf Fig. 2 erläutert, im Verlauf eines jeden Schrittes naturgemäß ab, bis sich eine Gleichgewichtskonzentration eingestellt hat. Nach Einstellen der Gleichgewichtskonzentration ist keine weitere Konzentrationsänderung mehr zu erwarten, die Konzentrationsänderungsrate (Steigung der jeweiligen Konzentrationsverläufe c(A), c(B) in Fig. 2) sinkt somit auf Null. Daher kann die Konzentrationsänderungsrate dazu verwendet werden, das faktische Ende eines Prozessschrittes zu erkennen. Sinkt die Rate unter einen vorgegebenen Schwellwert, der insbesondere in der Nähe von Null liegen kann, kann der jeweilige Schritt als beendet angesehen werden. Bevorzugt wird daraufhin ein Signal ausgegeben, das einen Nutzer des Gewebeprozessors dazu veranlasst, den jeweils nächsten Schritt einzuleiten, oder der nächste Schritt wird automatisch eingeleitet, beispielsweise durch Austausch des aktuell in der Retorte 103 befindlichen Fluids durch ein anderes, für den nachfolgenden Schritt verwendetes Fluid.

In der Praxis kann die Konzentrationsänderungsrate auch so bestimmt werden, dass ein aktuell bestimmter Messwert mit dem direkt davor bestimmten Messwert verglichen wird (z.B. mittels eines Quotienten oder einer Differenz). Je nach Vergleichsergebnis kann der Schwellwert für die Konzentrationsänderungsrate als erreicht angesehen werden. Beispielsweise kann ein solcher Quotient, der einen kleinen Abstand von 1 aufweist, oder eine entsprechende Differenz, die einen kleinen Abstand von 0 aufweist, als entsprechendes Indiz verwendet werden.

Es sei in diesem Zusammenhang erwähnt, dass sämtliche Schritte in ein und derselben Retorte 103 durchgeführt werden können, so dass beispielsweise eine Auslassöffnung und eine Einlassöffnung in der Retorte für die Entfernung des früheren Fluids und das Einfüllen des späteren Fluids vorgesehen sein können. In solchen Ausgestaltungen ist keine Manipulation des bearbeiteten Gewebes 105 erforderlich, wodurch die Gefahr einer Beschädigung des Gewebes 105 minimiert wird. In alternativen Ausgestaltungen kann jeder der Schritte in einer eigenen Retorte 103 durchgeführt werden, wobei in solche Ausgestaltungen beispielsweise ein Korb zur Aufnahme des Gewebes 105 verwendet werden kann, so dass jeweils der Korb in die jeweilige Retorte 103 eingebracht werden kann, um den Kontakt des Gewebes 105 mit dem jeweiligen Fluid herzustellen.

Die Überwachung der Konzentration bzw. deren Änderungsrate kann allgemein sämtliche in dem jeweiligen Fluid befindlichen Verbindungen betreffen, beispielsweise in einem Fluid gelöste oder suspendierte Gase, eine Hauptkomponente des jeweiligen Fluids und/oder aus dem Gewebe 105 in das Fluid übergehende Stoffe.

In jedem Fall ist von einem Ende des jeweiligen Prozessschrittes auszugehen, wenn die Konzentrationsänderungsrate gegen Null tendiert, so dass eine Ermittlung einer Absolutkonzentration nicht erforderlich ist. Dies birgt, wie bereits erläutert, den Vorteil einer erheblich einfacheren Datenverarbeitung, da gegebenenfalls eine Kalibration des Sensors 107 auf das jeweilige Fluid und die zu analysierende Verbindung unterbleiben kann und eine Umrechnung der Sensorsignale in die jeweiligen Konzentrationen entfällt. Eine Betrachtung des Rohsignals ist zur Beurteilung der Konzentrationsänderungsrate jeweils ausreichend. Allenfalls sind verschiedene Schwellwerte für unterschiedliche Prozessschritte erforderlich um die jeweils zu erwarteten absoluten Konzentrationsänderungen zu berücksichtigen. Beispielsweise kann in einem ersten Schritt des Fluidaustauschs mit deutlich höheren Konzentrationsänderungsraten gerechnet werden als bei dessen letztem Schritt, da gegen Ende des Fluidaustauschs innerhalb der Probe bereits nahezu reines Austausch-Lösungsmittel 120 vorliegt und der Konzentrationsunterschied zwischen Gewebe 105 und Austausch-Lösungsmittel 120 daher vergleichsweise gering ist.

Diese Überwachung der Konzentrationsänderungsraten kann auf jeden der zuvor erläuterten Verfahrensschritte angewandt werden, so dass insgesamt eine weitgehende Automatisierung der Gewebeprozessierung ermöglicht wird. Herkömmlicherweise ergibt sich das Problem, dass unterschiedliche Probengrößen sehr unterschiedliche Prozessierungszeiten erfordern und diese empirisch ermittelt werden müssen. Im Rahmen der Erfindung ergibt sich automatisch die jeweils optimale Prozessierungszeit durch die Überwachung der Konzentrationsänderungsraten, wodurch eine gleichbleibende Prozessierungsqualität gewährleistet ist.

Typischerweise sollte ein Verhältnis eines Volumens des Gewebes zu einem Volumen des eingesetzten Fluids einen Bereich von 1:1 bis 1:50 nicht verlassen, um aus der Konzentrationsänderungsrate belastbare Aussagen bzgl. des Prozessfortschritts ableiten zu können. Ist das Gewebevolumen im Vergleich zu dem Fluidvolumen zu gering, kann die Konzentrationsänderungsrate nicht mit hinreichender Genauigkeit erfasst werden.

Wie eingangs erwähnt, kann eine derartige Überwachung von Konzentrationsänderungsraten auch zur Steuerung anderer Bearbeitungen von biologischem Gewebe 105 verwendet werden. Beispielsweise kann ein Anfärben bestimmter Gewebeteile durch Überwachung einer Farbstoffkonzentration in einer Anfärbelösung überwacht und gesteuert werden, da sich auch hier die Konzentrationsänderungsrate stetig verringert.

Ferner kann, unabhängig von der konkreten Ausgestaltung des jeweiligen Prozessschrittes, eine Verarmung von Lösungen bzw. Fluiden an in einem Prozessschritt verbrauchten Substanzen dadurch festgestellt werden, dass die Änderungsrate zu Beginn des betreffenden Prozessschritts niedriger als ein vorbestimmbarer Schwellwert ist. Insbesondere kann ein solcher Schwellwert, der eine zu geringe Konzentration eines Fluids beschreibt, abhängig von einer Probengröße des bearbeiteten Gewebes 105 sein, da bei einer geringen Probengröße eine geringe Konzentrationsänderungsrate zu erwarten ist. Analoges kann auch für den Schwellwert gelten, der zur Ermittlung eines Endes eines Prozessschritts verwendet wird. Unterschreitet daher zu Beginn eines Prozessschritts die Konzentrationsänderungsrate einen vorbestimmbaren Schwellwert, kann beispielsweise ein Austausch des betreffenden Fluids ausgelöst bzw. angeregt werden.

Es sei hier betont, dass die Merkmale und ihre jeweiligen Vorteile nicht nur in der angegebenen Kombination, sondern auch in anderen Kombinationen und gegebenenfalls in Alleinstellung realisiert werden können, ohne den Rahmen der vorliegenden Erfindung zu verlassen.

## Patentansprüche

1. Verfahren zur Gewebeprozessierung zumindest eines biologischen Gewebes (105), umfassend
ein Bearbeiten des zumindest einen Gewebes in einer Retorte (103) unter Verwendung zumindest eines Fluids (110, 120, 130, 140),
ein Ermitteln einer Konzentrationsänderungsrate in dem zumindest einen Fluid (110, 120, 130, 140), und
ein Durchführen einer Maßnahme in Abhängigkeit von der ermittelten Konzentrationsänderungsrate.

2. Verfahren nach Anspruch 1, wobei das Bearbeiten ein zumindest teilweises Anfärben des zumindest einen Gewebes (105) umfasst.

3. Verfahren zur Gewebeprozessierung zumindest eines biologischen Gewebes nach Anspruch 1 oder 2, wobei das Bearbeiten des zumindest einen Gewebes (105) nacheinander einen oder mehrere der folgenden Schritte, zweckmäßigerweise in der angegebenen Reihenfolge, umfasst:
ein Fixieren des zumindest einen Gewebes (105) unter Verwendung zumindest eines Fixierfluids (110), wobei das zumindest eine Gewebe (105) gehärtet wird,
einen Fluidaustausch unter Verwendung eines polaren nichtwässrigen Austausch-Lösungsmittels (120), wobei Wasser aus dem zumindest einen Gewebe (105) verdrängt und durch das Austausch-Lösungsmittel (120) ersetzt wird,
ein Klären unter Verwendung eines Klärfluids (130), das insbesondere ein unpolareres organisches Lösungsmittel als das Austausch-Lösungsmittel (120) umfasst, wobei das Austausch-Lösungsmittel (120) in dem zumindest einen Gewebe (105) durch das Klärfluid (130) ersetzt wird, und
ein Imprägnieren des zumindest einen Gewebes (105) unter Verwendung eines Imprägniermittels (140), wobei das Klärfluid (130) in dem zumindest einen Gewebe (105) durch das Imprägniermittel (140) ersetzt wird,
wobei das Ermitteln der Konzentrationsänderungsrate in dem Fixierfluid (110) und/oder dem Austausch-Lösungsmittel (120) und/oder dem Klärfluid (130) und/oder dem Imprägniermittel (140) während der jeweiligen Verwendung durchgeführt wird, und
zumindest eine Maßnahme in Abhängigkeit von zumindest einer der ermittelten Konzentrationsänderungsraten durchgeführt wird.

4. Verfahren nach einem der vorstehenden Ansprüche, wobei die Maßnahme ein Beenden des jeweiligen Verfahrensschrittes, während dessen die Konzentrationsänderungsrate ermittelt wurde, und ein Fortschreiten zum jeweils folgenden Verfahrensschritt umfasst, wenn die Konzentrationsänderungsrate einen vorbestimmbaren Schwellwert unterschreitet.

5. Verfahren nach einem der vorstehenden Ansprüche, ferner umfassend:
ein Ermitteln wenigstes einer absoluten Konzentration in dem Fluid, insbesondere in Rückbezug auf Anspruch 3 dem Fixierfluid (110) und/oder dem Austausch-Lösungsmittel (120) und/oder dem Klärfluid (130) und/oder dem Imprägniermittel (140), und
ein Einleiten eines Austauschs des jeweiligen Fluids (110, 120, 130, 140), wenn die ermittelte absolute Konzentration einen vorgebbaren Schwellwert erreicht.

6. Gewebeprozessor (100) zur Behandlung von Gewebeproben, der eine Retorte, die zur Aufnahme einer oder mehrerer biologischer Gewebe oder Proben (105) sowie zur Befüllung mit zumindest einem organischen Fluid eingerichtet ist, und zumindest einen Sensor (107) umfasst, wobei der Sensor eingerichtet ist, um eine Konzentrationsänderungsrate in einem in der Retorte verwendeten Fluid (110, 120, 130, 140) zu ermitteln, und der Gewebprozessor eingerichtet ist um in Abhängigkeit der ermittelten Konzentrationsänderungsrate weitere Maßnahmen durchzuführen.

7. Gewebeprozessor (100) nach Anspruch 6, wobei der Sensor (107) dazu eingerichtet ist, die Konzentration und/oder Konzentrationsänderungsrate auf Basis einer Schallgeschwindigkeit in dem Fluid (110, 120, 130, 140) und/oder einer akustischen Impedanz des Fluids (110, 120, 130, 140) und/oder einer Temperatur des Fluids (110, 120, 130, 140) und/oder einem chemischem und/oder einem elektrochemischem und/oder einem elektrischen Verhalten des Fluids (110, 120, 130, 140) und/oder optischen Eigenschaften des Fluids (110, 120, 130, 140) zu ermitteln.

## Claims

1. Method for tissue processing of at least one biological tissue (105), comprising
processing the at least one tissue in a retort (103) using at least one fluid (110, 120, 130, 140),
determining a rate of change in concentration in the at least one fluid (110, 120, 130, 140), and
implementing a measure depending on the determined rate of change in concentration.

2. Method according to claim 1, wherein processing comprises at least partially dyeing the at least one tissue (105).

3. Method for tissue processing of at least one biological tissue according to claim 1 or 2, wherein processing the at least one tissue (105) sequentially comprises one or a plurality of the following steps, expediently in the specified order:
fixing the at least one tissue (105) using at least one fixing fluid (110), wherein the at least one tissue (105) is cured,
exchanging a fluid using a polar non-aqueous exchange solvent (120), wherein water is displaced from the at least one tissue (105) and replaced by the exchange solvent (120),
clarifying using a clarifying fluid (130), which in particular comprises a more non-polar organic solvent than the exchange solvent (120), wherein the exchange solvent (120) in the at least one tissue (105) is replaced by the clarifying fluid (130), and
impregnating the at least one tissue (105) using an impregnating agent (140), wherein the clarifying fluid (130) in the at least one tissue (105) is replaced by the impregnating agent (140),
wherein determining the rate of change in concentration in the fixing fluid (110) and/or the exchange solvent (120) and/or the clarifying fluid (130) and/or the impregnating agent (140) is carried out during the respective use, and
at least one measure is carried out depending on at least one of the determined rates of change in concentration.

4. Method according to any one of the preceding claims, wherein the measure comprises terminating the respective method step during which the rate of change in concentration was determined and proceeding to the respectively following method step if the rate of change in concentration falls below a predeterminable threshold value.

5. Method according to any one of the preceding claims, further comprising:
determining at least one absolute concentration in the fluid, in particular with reference to claim 3 the fixing fluid (110) and/or the exchange solvent (120) and/or the clarifying fluid (130) and/or the impregnating agent (140), and
initiating an exchange of the respective fluid (110, 120, 130, 140) when the determined absolute concentration reaches a predefinable threshold value.

6. Tissue processor (100) for treating tissue samples, comprising a retort, configured to receive one or a plurality of biological tissues or samples (105) and to fill them with at least one organic fluid, and at least one sensor (107), wherein the sensor is configured to determine a rate of change in concentration in a fluid (110, 120, 130, 140) used in the retort, and the tissue processor is configured to carry out further measures depending on the determined rate of change in concentration.

7. Tissue processor (100) according to claim 6, wherein the sensor (107) is configured to determine the concentration and/or rate of change in concentration based on a speed of sound in the fluid (110, 120, 130, 140) and/or an acoustic impedance of the fluid (110, 120, 130, 140) and/or a temperature of the fluid (110, 120, 130, 140) and/or a chemical and/or electrochemical and/or electrical behaviour of the fluid (110, 120, 130, 140) and/or optical properties of the fluid (110, 120, 130, 140).

## Revendications

1. Procédé de traitement de tissu d'au moins un tissu biologique (105), comprenant
un traitement de l'au moins un tissu dans une cornue (103) en utilisant au moins un fluide (110, 120, 130, 140),
une détermination d'un taux de modification de concentration dans l'au moins un fluide (110, 120, 130, 140), et
une réalisation d'une mesure en fonction du taux de modification de concentration déterminée.

2. Procédé selon la revendication 1, dans lequel le traitement comprend une coloration au moins partielle de l'au moins un tissu (105).

3. Procédé de traitement de tissu d'au moins un tissu biologique selon la revendication 1 ou la revendication 2, dans lequel le traitement de l'au moins un tissu (105) comprend successivement une ou plusieurs des étapes suivantes, de manière appropriée dans l'ordre indiqué :
une fixation de l'au moins un tissu (105) en utilisant au moins un fluide de fixation (110), dans lequel l'au moins un tissu (105) est durci,
un échange de fluide en utilisant un solvant de remplacement polaire non aqueux (120), dans lequel de l'eau est refoulée hors de l'au moins un tissu (105) et est remplacée par le solvant de remplacement (120),
une clarification en utilisant un fluide de clarification (130), qui comprend en particulier un solvant organique davantage non polaire que le solvant de remplacement (120), dans lequel le solvant de remplacement (120) est remplacé dans l'au moins un tissu (105) par le fluide de clarification (130), et
une imprégnation de l'au moins un tissu (105) en utilisant un agent d'imprégnation (140), dans lequel le fluide de clarification (130) est remplacé dans l'au moins un tissu (105) par l'agent d'imprégnation (140),
dans lequel la détermination du taux de modification de concentration dans le fluide de fixation (110) et/ou le solvant de remplacement (120) et/ou le fluide de clarification (130) et/ou l'agent d'imprégnation (140) est réalisée pendant l'utilisation respective, et
au moins une mesure est réalisée en fonction d'au moins un des taux de modification de concentration déterminés.

4. Procédé selon l'une quelconque des revendications précédentes, dans lequel la mesure comprend la fin de l'étape de procédé concernée au cours de laquelle le taux de modification de concentration a été déterminé et une progression vers l'étape de procédé suivante respective lorsque le taux de modification de concentration ne dépasse pas une valeur de seuil pouvant être prédéterminée.

5. Procédé selon l'une quelconque des revendications précédentes, comprenant en outre :
une détermination d'au moins une concentration absolue dans le fluide, en particulier en référence à la revendication 3 du fluide de fixation (110) et/ou du solvant de remplacement (120) et/ou du fluide de clarification (130) et/ou de l'agent d'imprégnation (140), et
une initiation d'un remplacement du fluide respectif (110, 120, 130, 140) lorsque la concentration absolue déterminée atteint une valeur de seuil pouvant être prédéterminée.

6. Système de traitement de tissu (100) pour traiter des échantillons de tissu, qui comprend une cornue, qui est mise au point pour recevoir un ou plusieurs tissus ou échantillons biologiques (105) et pour être remplie d'au moins un fluide organique, et au moins un capteur (107), dans lequel le capteur est mis au point pour déterminer un taux de modification de concentration dans un fluide (110, 120, 130, 140) utilisé dans la cornue, et le processeur de tissu est mis au point pour réaliser des mesures supplémentaires en fonction du taux de modification de concentration déterminé.

7. Système de traitement de tissu (100) selon la revendication 6, dans lequel le capteur (107) est mis au point pour déterminer la concentration et/ou le taux de modification de concentration sur la base d'une vitesse du son dans le fluide (110, 120, 130, 140) et/ou d'une impédance acoustique du fluide (110, 120, 130, 140) et/ou d'une température du fluide (110, 120, 130, 140) et/ou d'un comportement chimique et/ou électrochimique et/ou électrique du fluide (110, 120, 130, 140) et/ou de propriétés optiques du fluide (110, 120, 130, 140).
